# EUROPEAN PATENT SPECIFICATION

(11) **EP 0 647 202 B1**
(45) Date of publication and mention of the grant of the patent: **21.10.1998**
(21) Application number: 93915084.3
(22) Date of filing: 28.06.1993
(51) Int. Cl.: B65G 15/08

(54) **ARRANGEMENT FOR A CONVEYOR**
ANORDNUNG FÜR EINEN FÖRDERER
DISPOSITIF TRANSPORTEUR

(30) Priority: 02.07.1992 SE 9202039
(43) Date of publication of application: 12.04.1995
(73) Proprietor: AHL, Leif, S-531 93 Lindköping (SE)
(72) Inventor: AHL, Leif, S-531 93 Lindköping (SE)
(74) Representative: RACKETTE Partnerschaft Patentanwälte
(86) International application number: SE9300584
(87) International publication number: WO9401351

(56) References cited:
- WO-A-91/01632
- DE-C- 520 822
- GB-A- 638 681
- US-A- 5 103 967

## Description

The present invention relates to a conveyor comprising a driven endless flexible belt running around deflector devices the load-bearing part of the belt is so arranged as to be formed by and supported on a supporting surface which exhibits in longitudinal direction a transition from an essentially plane form to a curved form completely bridging the distance between side walls of supporting frame sections and further comprising belt edge delimiting devices extending along said supporting surface.

Such a conveyor is disclosed in GB-A-638 681. A supporting surface of said conveyor is arranged between end walls of supporting frame sections. The supporting surface exhibits in longitudinal direction a transition from an initial plane form to a curved form completely bridging the distance between the end walls. The supporting surface is fixed to the end walls with integral edge flanges extending at right angles to flat adjacent section portion of the supporting surface. To these outwardly bent edge flanges of the supporting surface longitudinally extending L-shaped sheet metal guard members are attached rigidly. These guard members are formed with integral guard flanges disposed in spaced parallel overlapping relationship with adjacent flat section portions of the supporting surface so as to provide therebetween a groove in which the adjacent edge of the upper run of the belt can run freely.

The above mentioned conveyor turns out to be satisfactory with regard to a continuous support of the upper run of the belt and efficient protection of the longitudinal edges of the belt from the transported material but shows some deficiencies with respect to the rather complicated overall construction, the need to adapt the guard members to the inclinations of both the end walls of the supporting frame sections and the flat section portions of the supporting surface. Furthermore, it may happen that dusty highly fine-grained loaded bulk material penetrates between small gap-like openings between the outwardly bent edge flanges of the supporting surface and the guard members inside the supporting frame sections causing damaging of sensitive elements of drive unit means like rollers provided with bearings.

WO-A-9 101 632 discloses a conveyor with a flat belt inclosed by a cover member.

The main object of this invention is to overcome these deficiencies and to provide a conveyor which is easy to assemble and permits the transport of bulk material reliably and efficiently.

This object is achieved by means of a conveyor in accordance with the present invention characterized in that said supporting frame sections comprise a base and inwardly angled upper attachment parts situated above each side wall, in that lateral parts of said supporting surface exhibit a transition to belt edge delimiting devices formed from pairs of inwardly angled edge parts of the respective supporting surface interacting with a respective longitudinal belt edge so as the belt is guided along the longitudinal belt edges by said lateral parts and the belt edge delimiting devices integrally formed with said supporting surface, and in that the supporting surface is attached to the supporting frame sections in the area of the respective upper attachment part.

The conveyor is easy to assemble by connecting the supporting surface to top attachment parts of the supporting frame sections, i.e. by means of spot welding, without the need of further elements which have to be adapted to either the supporting frame sections or the supporting surface.

The invention is described below in the context of a preferred illustrative example, in conjunction with which reference is made to the accompanying drawings, in which:

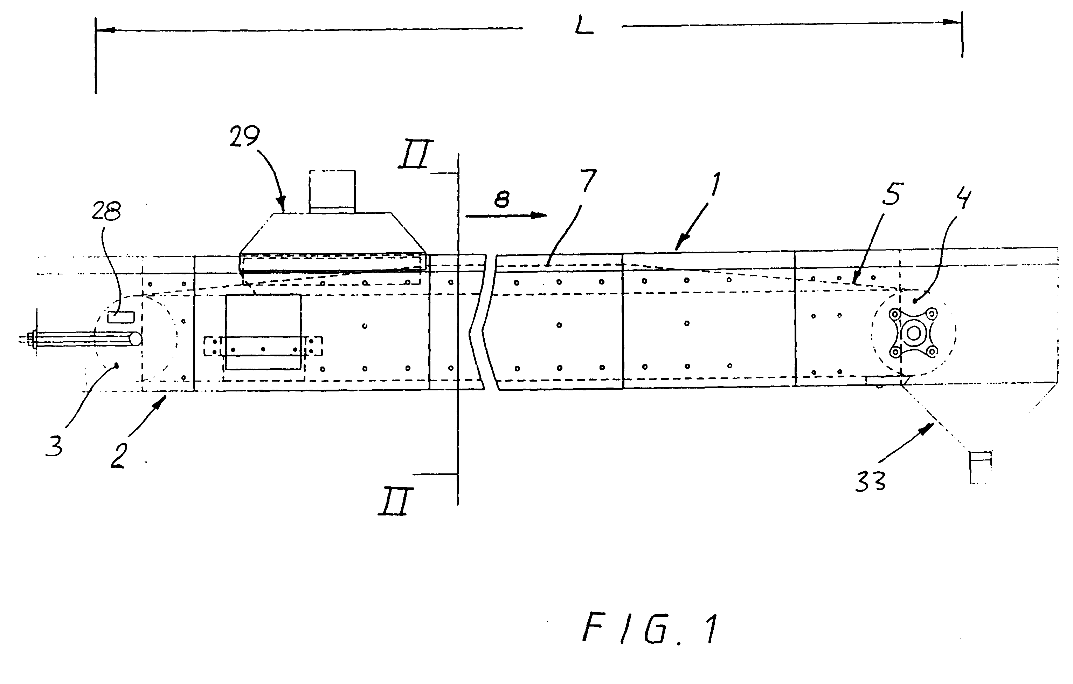

- Fig. 1: shows a conveyor in accordance with the invention, viewed from the side;

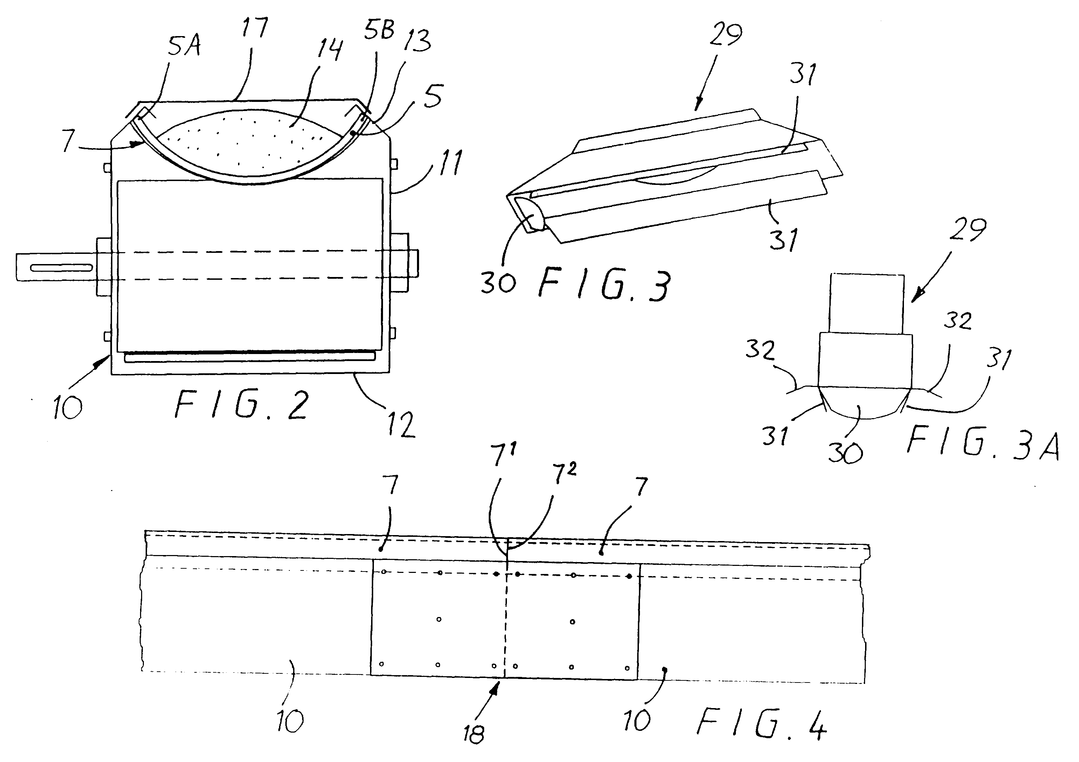

- Fig. 2: shows a sectional view along the line II-II in Fig. 1;
- Fig. 3: shows a feed hopper in perspective view;
- Fig. 3A: shows a side view of the feed hopper;
- Fig. 4: shows a joint between two longitudinally joined supporting surfaces viewed from the side;
- Figs. 5 and 6: show variants of examples of initial supporting surfaces;
- Figs. 7 and 8: show variants of examples of intermediate supporting surfaces;

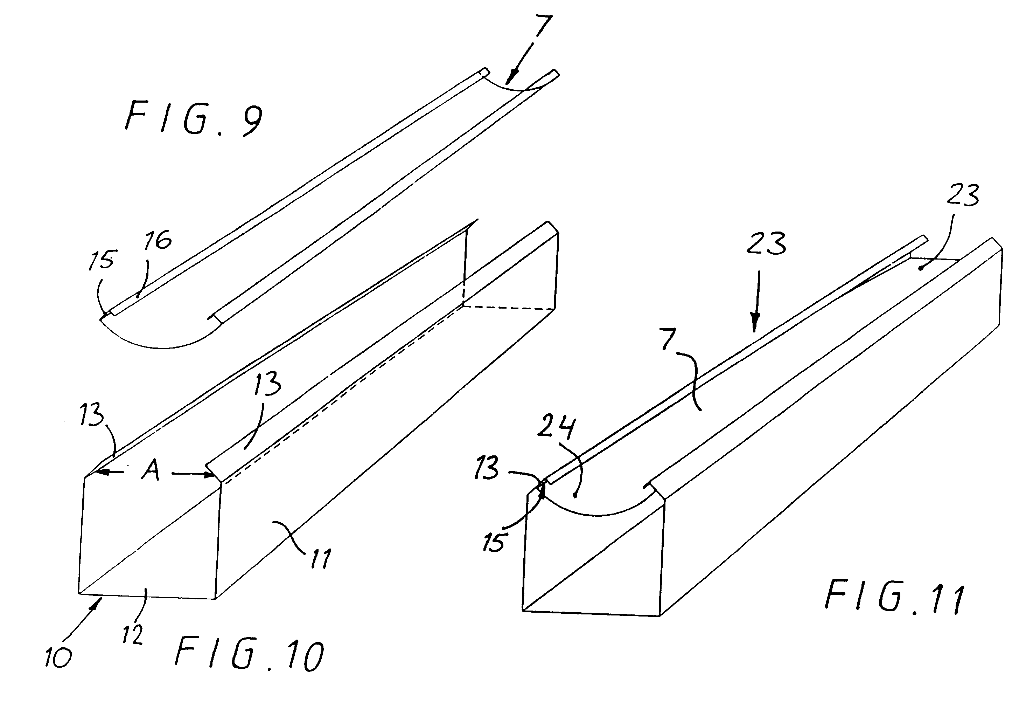

- Fig. 9: shows a dismantled supporting surface;
- Fig. 10: shows a support frame section in perspective;
- Fig. 11: shows examples of final supporting surfaces;

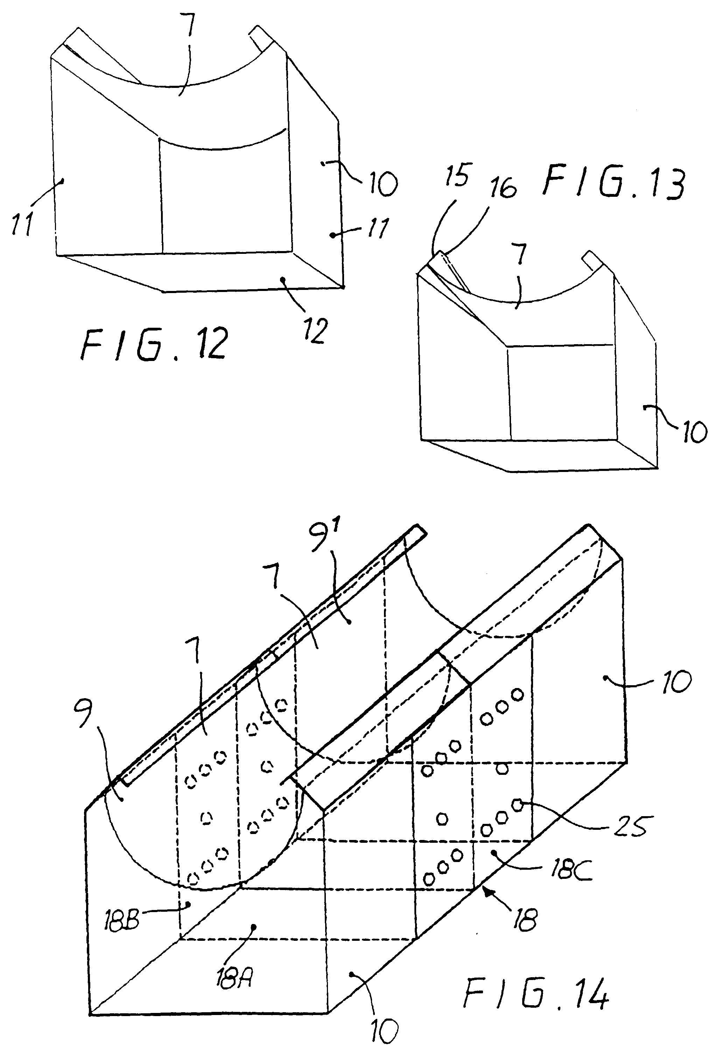

- Figs. 12 and 13: show perspective views of supporting surfaces seen at an angel from below; and
- Fig. 14: shows a joint between tow longitudinally joined supporting surfaces viewed in perspective.

An arrangement 1 of a conveyor 2 in accordance with the present invention comprises a driven endless flexible belt 5 running around deflector devices 3, 4. The upper running part of the belt, i.e. the load-bearing part 6 of the conveyor belt 5 is so arranged as to be both formed by and supported on a supporting surface 7. Said supporting surface 7 is so arranged as to exhibit a transition from an essentially plane form to a curved form.

The supporting surface 7 is so arranged, for the purpose of permitting the construction of a conveyor 2 with a certain desired length L, as to be appropriately formed from a number of supporting surface sections 9, 9¹ joined together in the longitudinal extent 8 of the conveyor, which supporting surface sections 9, 9¹ are preferably integrated with associated supporting frame sections 10.

The supporting frame sections 10 are formed preferably from longitudinally hollow channels consisting of side walls 11, a base 12 and an upper attachment part 13 situated above each side wall 11. An associated supporting surface section 9 is so arranged as to be capable of being connected, for example capable of being attached by spot welding, in conjunction with said supporting frame sections 10 in the area of the respective upper attachment part 13. Said supporting surface section 9 completely bridges the distance to the upper attachment parts 13 situated laterally at a relative distance A, whereby loaded bulk material 14 is prevented from falling down from the conveyor 2.

Lateral parts 15 of the supporting surface sections 9 exhibit a transition to belt edge delimiting devices 16, which are formed from pairs of inwardly angled edge parts of the respective supporting surface sections 9, situated opposite one another and so arranged as to interact with a respective longitudinal belt edge 5A, 5B.

For the purpose of preventing the material 14 being transported from finding its way outside the conveyor 2, for example by also damming up the lateral edges of the conveyor 2, or by permitting contact from outside with the conveyor belt 5 and the load 14, removable covers 17 are included which are able to cover the conveyor 2. Said covers 17, which can be formed from flat sheets with downward-sloping sides, interact with the belt edge delimiting devices 16 and/or the lateral parts 15 of the supporting surface sections 9.

The simple and effective construction of a conveyor 2 is made possible thanks to the ability of a desired number of supporting surface sections 9 placed together edge 7¹ to edge 7² to be joined together in a longitudinal sense be means of strap-shaped connecting elements 18 which bridge and connect together pairs of supporting frame sections 10, preferably by means of elements 18 which comprise both a bottom part 18A and side parts 18B, 18C beneath and to the side of said sections 10.

It is appropriate for at least a number of the supporting surface section 9, supporting frame sections 10 and connections 18 contained in the conveyor 2 to be made of galvanized sheet steel, plastic or some other suitable similar material.

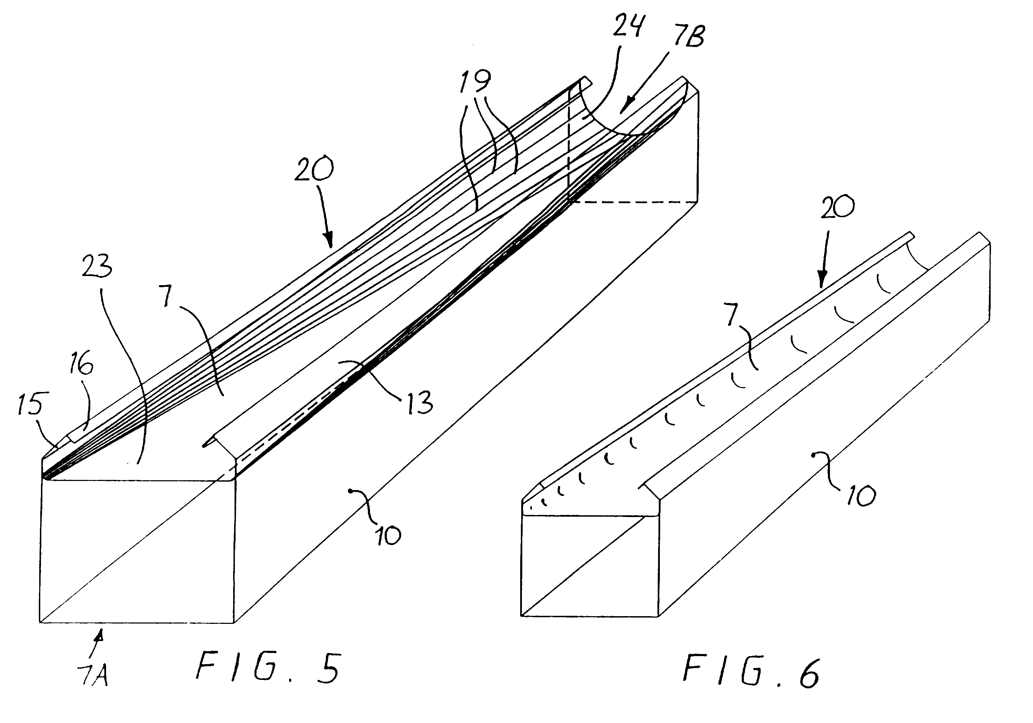

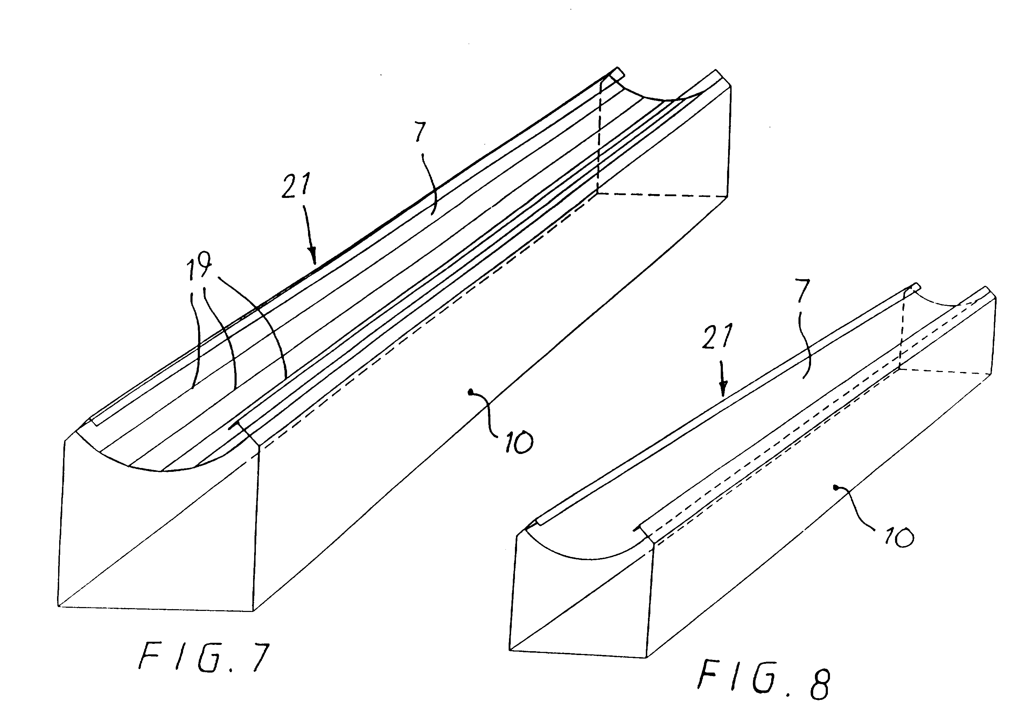

It can be appreciated from Figures 5 and 7 that the supporting surface sections 9 have been bent so that any residual bending lines 19 can be seen, or at least traced, in the supporting surface sections 9. Said bending lines 19 are produced, for example, in the course of the radiation bending of sheet steel to the desired curvature of the supporting surface section 9 in question.

Figures 6 and 8 show smoother formed supporting surfaces 7, which can be produced, for example, by some other process of forming the material in question, or by making the supporting surface sections 9 from, for example, a plastic material which lends itself to being manufactured with a curved form without any bending creases or other similar lines occurring in the final product in question.

A conveyor 2 consists of an initial part 20, a number of intermediate parts 21, and a final part 22. The initial part 20 shown in Figures 5 and 6 has a supporting surface 7 which, in the direction away from the inlet end 7A, exhibits a transition from an essentially plane form 23 successively to an essentially curved form 24 at the discharge end 7B of the initial part 20, similar to a channel. The conveyor belt 5 rests upon said supporting surface 7, both as the belt 5 is guided in from a deflector pulley and a tensioner pulley 3, and as the belt 5 is forced to adopt essentially the form of the upper surface of the supporting surface 7. The belt 5 is guided along the edges 5A, 5B of the lateral parts 15 and the belt edge delimiting devices 16 situated to either side of the supporting surface 7, so that the belt 5 is prevented from slipping sideways out of the supporting surface 7. Thereafter the belt 5 rests against the supporting surface 7 and, by adapting the choice of material between the belt 5 and the supporting surface 7, the friction between them lies within acceptable limits for the conveyor 2 to function efficiently and reliably.

An initial part 20 is followed by one intermediate part 21 arranged edge-to-edge and connected together by means of, for example, a connecting strap 18, and the conveyor 2 can be assembled simply, and also dismantled simply by means of screwed joints 25 from outside the sides of the conveyor.

These parts are then followed by the desired number of intermediate parts 21, so that the conveyor 2 achieves the desired length with regard to both the transport distance and the permissible drive values for the driving motor and on the driving roller 4 for the conveyor belt 5.

Finally, at the end of the conveyor 2 and attached to an intermediate part 21, there is a final part 22 with a supporting surface 7 which exhibits a transition from a curved form 24 to an essentially plane form 23.

A conveyor belt 5, which is drawn over rollers 3, 4, and which rests on said supporting surfaces 7, can then be vulcanized or joined in some other suitable fashion to form an endless conveyor intended to accept a load 14 on its upper load-bearing part 6 and for transport in the direction of driving and the direction of transport 8, at the same time as it slides over subjacent supporting surface sections 9 along the length L of the conveyor. The return part 26 of the belt 5 runs inside the frame, in conjunction with which any material 14 or dust, etc., that has fallen down is scraped away from same by means of, for example, a scraper 28 operating in conventional manner at the starting end.

Also present at the starting end are a feed hopper 29 for feeding the intended material 14 onto the conveyor 2, and flaps 30, 31 situated below, behind and to the sides guide the material and prevent it from finding its way other than onto belt 5. Lateral edges 32 can support the hopper 29 on the conveyor 2.

At the final end of the conveyor 2 the material 14 may be intended to fall freely down into a receiving hopper 33 for further delivery and discharge to the desired point of consumption.

A conveyor 2 produced in accordance with the invention functions efficiently and reliably over a long period and enables a large quantity of material 14 to be transported in only a short time. Cereal grain, for example, can be transported at a rate of approximately 34 ton/h, with the drive provided by a motor of about 1.5 kW and with a belt 5 which exhibits a width of 250 mm.

The invention is not, however, restricted to the illustrative example described above and shown in the drawings, but may be varied within the scope of the patent claims.

## Claims

1. Conveyor (2) comprising a driven endless flexible belt (5) running around deflector devices (3, 4), the load-bearing part of the belt (5) being so arranged as to be formed by and supported on a supporting surface (7) which exhibits in longitudinal direction a transition from an essentially plane form to a curved form completely bridging the distance (A) between side walls (11) of supporting frame sections (10) and further comprising belt edge delimiting devices (16) extending along said supporting surface (7), **characterized in that** said supporting frame sections (10) comprise a base (12) and inwardly angled upper attachment parts (13) situated above each side wall (11), in that lateral parts (15) of said supporting surface (7) exhibit a transition to belt edge delimiting devices (16) formed from pairs of inwardly angled edge parts of the respective supporting surface (7) interacting with a respective longitudinal belt edge (5A, 5B) so as to guide the belt (5) along the longitudinal belt edges (5A, 5B) by said lateral parts (15) and the belt edge delimiting devices (16), the lateral parts (15) and the belt edge delimiting devices (16) being integrally formed with said supporting surface (7), and in that the supporting surface (7) is attached to the supporting frame sections (10) in the area of the respective upper attachment part (13).

2. Conveyor in accordance with claim 1, characterized in that a desired number of supporting surface sections (9) is capable of being joined together in an longitudinal sense (8) by means of connecting elements (18) which bridge and connect together pairs of supporting frame sections (10), preferably strap-shaped elements which extend beneath and to the side.

3. Conveyor in accordance with claim 1 or 2, characterized in that the outside of the respective supporting surface (7) forms an supporting surface for a removable conveyor cover (17).

4. Conveyor in accordance with one or other of the above claims, characterized in that at least a number of the supporting surfaces (7), supporting frame sections (10) an connections (18) contained in the conveyor (2) are made of galvanized sheet, plastic or a similar material.

## Patentansprüche

1. Fördermittel (2) mit einem angetriebenen, endlosen, flexiblen Band (5), das um Umlenkvorrichtungen (3, 4) umläuft, wobei der ladungstragende Teil des Bandes (5) so eingerichtet ist, daß er durch eine Stützfläche (7) geformt und getragen wird, die in Längsrichtung einen Übergang von einer im wesentlichen ebenen Gestalt zu einer gekrümmten Gestalt aufweist und den Abstand (A) zwischen Seitenwänden (11) von Stützrahmenabschnitten (10) brückt, und mit Bandkantenbegrenzungsvorrichtungen (16), die sich entlang der Stützfläche (7) erstrecken, **dadurch gekennzeichnet**, die Stützrahmenabschnitte (10) ein Grundteil (12) und nach innen abgewinkelte obere Befestigungsteile (13) aufweisen, die oberhalb jeder Seitenwand (11) angeordnet sind, daß Seitenteile (15) der Stützfläche (7) einen Übergang zu Bandkantenbegrenzungsvorrichtungen (16) aufweisen, die durch Paare von nach innen abgewinkelten Kantenteilen der zugehörigen Stützfläche (7) gebildet sind, welche mit einer zugehörigen längsseitigen Bandkante (5A, 5B) zusammenwirken, um das Band (5) entlang der längsseitigen Bandkanten (5A, 5B) durch die Seitenteile (15) und die Bandkantenbegrenzungsvorrichtungen (16) zu führen, wobei die Seitenteile (15) und die Bandkantenbegrenzungsvorrichtungen (16) einstückig mit der Stützfläche (7) ausgebildet sind, und daß die Stützfläche (7) im Bereich des zugehörigen oberen Befestigungsteils (13) an die Stützrahmenabschnitte (10) angebracht ist.

2. Fördermittel nach Anspruch 1, dadurch gekennzeichnet, daß eine gewünschte Anzahl von Stützflächenabschnitten (9) in einer Längsrichtung (8) mittels Verbindungselementen (18) miteinander verbindbar sind, die Paare von Stützrahmenabschnitte (10) vorzugsweise mit bandartigen Elementen, die sich unterhalb und seitlich erstrecken, überbrücken und miteinander verbinden.

3. Fördermittel nach Anspruch 1 oder 2, dadurch gekennzeichnet, daß die Außenseite der zugehörigen Stützfläche (7) eine Tragefläche für eine abnehmbare Fördermittelabdeckung (17) bildet.

4. Fördermittel nach einem der vorangehenden Ansprüche, dadurch gekennzeichnet, daß wenigstens ein Teil der Stützflächen (7), der Stützrahmenabschnitte (10) und der von dem Fördermittel (2) umfaßten Verbinder (18) aus galvanisiertem Blech, Kunststoff oder einem ähnlichen Material hergestellt ist.

## Revendications

1. Convoyeur (2) comprenant une bande flexible sans fin, entraînée (5) passant autour de dispositifs déflecteurs (3, 4), la partie de la bande (5) qui porte la charge étant agencée de manière à être formée par, et supportée sur, une surface support (7), laquelle présente dans la direction longitudinale une transition entre une forme essentiellement plane et une forme courbe formant un pont complet sur la distance (A) entre des parois latérales (11) des parties de structure support (10) et comprenant en outre des dispositifs (16) délimitant des bords de bande s'étendant le long de ladite surface support (7), caractérisé en ce que lesdites parties de structure support (10) comprennent une base (12) et des pièces de fixation supérieures inclinées vers l'intérieur (13) placées au-dessus de chaque paroi latérale (11), en ce que des pièces latérales (15) de ladite surface support (7) forment une transition avec les dispositifs (16) délimitant des bords de bande formés de paires de pièces de bord inclinées vers l'intérieur de la surface support correspondante inclinées vers l'intérieur (7), coopérant avec un bord longitudinal respectif de bande (5A, 5B) de manière à guider la bande (5) le long des bords longitudinaux de bande (5A, 5B) par lesdites pièces latérales (15), et les dispositifs (16) délimitant les bords de bande, les pièces latérales (15) et les dispositifs (16) délimitant les bords de bande étant intégralement formés avec ladite surface support (7), et en ce que la surface support (7) est fixée aux parties de structure support (10) dans la région de la pièce de fixation supérieure correspondante (13).

2. Convoyeur selon la revendication 1, caractérisé en ce qu'un nombre désiré de parties de surface support (9) peuvent être assemblées entre elles dans une direction longitudinale (8) au moyen d'éléments de raccordement (18) qui forment un pont et relient entre elles des paires de parties de structure support (10), de préférence des éléments en forme de sangle qui s'étendent au-dessous et sur le côté.

3. Convoyeur selon l'une des revendications 1 ou 2, caractérisé en ce que l'extérieur de la surface support respective (7) forme une surface support pour un dessus amovible de convoyeur (17).

4. Convoyeur selon l'une quelconque des revendications ci-dessus, caractérisé en ce qu'un certain nombre au moins de surfaces supports (7) supportant des parties de structure (10) et des éléments de raccordement (18) faisant partie du convoyeur (2) sont fabriqués en tôle galvanisée, en matière plastique ou matériau analogue.
